# EUROPÄISCHE PATENTSCHRIFT

(11) **EP 0 338 449 B1**
(45) Veröffentlichungstag und Bekanntmachung des Hinweises auf die Patenterteilung: **07.07.1993**
(21) Anmeldenummer: 89106720.9
(22) Anmeldetag: 14.04.1989
(51) Int. Cl.: B23K 7/10, B23K 37/00, B23Q 5/58

(54) **Kollisionsschutzvorrichtung für einen Brenner**
Anti-collision protective device for a torch
Dispositif de protection anti-collision pour une torche

(30) Priorität: 18.04.1988 DE 3812786
(43) Veröffentlichungstag der Anmeldung: 25.10.1989
(73) Patentinhaber: MESSER GRIESHEIM GMBH, D-60314 Frankfurt (DE)
(72) Erfinder: Derse, Josef, Dr., D-6458 Rodenbach 1 (DE); Klein, Werner, D-6000 Frankfurt/Main (DE); Staacks, Dieter, D-6057 Diezenbach (DE)

(56) Entgegenhaltungen:
- DE-A- 3 445 849
- GB-A- 2 067 447
- US-A- 3 153 109

## Beschreibung

Die Erfindung betrifft eine Kollisionsschutzvorrichtung für einen Brenner nach dem Oberbegriff des Anspruches 1.

Bei der Bearbeitung, insbesondere beim thermischen Trennen von Werkstücken unter Wasser mit einem Plasmaschneidbrenner, ist es erforderlich, den Brenner und/oder Kollisionskörper beim Zusammenstoßen derselben gegen Beschädigungen zu schützen.

Es sind Schutzvorrichtungen bekannt, die zwischen Brenner und Führungsmaschine angeordnet sind. Beim Anstoßen des Brenners an einen Kollisionskörper, beispielsweise an einen Vorrichtungs - oder Werkstückkörper, wird der Brenner gekippt. Über diese Lageveränderung des Brenners wird ein Schaltsignal ausgelöst, mit dem beispielsweise die Maschine ausgeschaltet wird (DE 36 20 258 C2).

Weiterhin sind berührungslose oder taktile Fühler bekannt, die der genauen Führung des Brenners dienen. Aus der DE 19 14 876 A1 ist eine kapazitive Fühlereinrichtung bekannt, die beim Auftreten eines Kurzschlußzustandes ein Steuersignal erzeugt.

Aus der gattungsgemäßen DE 30 42 744 A1 ist eine Kollisionsschutzvorrichtung bekannt, die aus mehreren, den Brenner umgebenden elastischen Fühlerstäben besteht, die in einem am Brenner angeordneten Lagerring an ihren Enden fest eingespannt sind. Beim Anstoßen an einen Kollisionskörper wird das freie Ende des jeweiligen Fühlerstabes so lange elastisch ausgelenkt, bis es an einem den Brenner umgebenden Kontaktring anliegt.

Bei einer derartig ausgebildeten Kollisionsschutzvorrichtung kann jedoch ein sicheres Erzeugen eines Schaltsignales nicht gewährleistet werden, da der Brenner aufgrund der großen Lücken zwischen den Fühlerstäben weiterhin an Kollisionskörper anstoßen kann. Da die Fühlerstäbe in entsprechendem Sicherheitsabstand den Brenner umgeben müssen und der Kontaktring in geringem Abstand unterhalb des Lagerringes angeordnet ist, ergeben sich bei dieser Ausbildung der Kollisionsschutzvorrichtung lange Schaltwege, die ebenfalls kein sicheres Abbremsen der Bearbeitungsmaschine vor der Kollision gewährleisten. Bei einer Vertikal-Bewegung des Brenners ist dieser durch die Kollisionsschutzvorrichtung nicht geschützt.

Ausgehend von dem vorstehend genannten Stand der Technik liegt der Erfindung die Aufgabe zugrunde, eine Kollisionsschutzvorrichtung für einen Brenner zu schaffen die bei einer Kollision zwischen dem Brenner und einem Kollisionskörper eine sichere Abschaltung der Bearbeitungsmaschine gewährleistet, so daß eine Beschädigung des Brenners und/oder des Fühlers und/oder des Kollisionskörpers ausgeschlossen werden kann.

Diese Aufgabe wird bei einer gattungsgemäßen Kollisionsschutzvorrichtung durch die Merkmale des Anspruches 1 gelöst.

Die mit der Erfindung erzielten Vorteile bestehen einerseits in den verringerten Schaltwegen und somit in der geringeren Ansprechzeit des Fühlers und andererseits in der vertikalen und horizontalen Beweglichkeit des Fühlers. Über die Lageveränderung des Fühlers in horizontaler und vertikaler Richtung wird ein Schaltsignal vorzugsweise zum Abschalten der Führungsmaschine ausgelöst. Dabei sind die Schaltwege nach allen Richtungen gleich lang. Hinzu kommt, daß der Fühler selbst über zwei Kipplager gegen Beschädigungen geschützt ist. Diese können nach dem Abschalten der Führungsmaschine aufgrund deren Massenträgheit ("Bremsweg") aktiviert werden. Durch diesen Fühlerschutz ist es möglich, den vorteilhaft geschlossenen Fühlerring des Fühlers mit geringerem Durchmesser auszubilden. Dies erhöht die Verfahrbarkeit des Brenners mit dem Fühler, beispielsweise in einem engen Spalt und ermöglicht somit einen passiven Kollisionsschutz.

Weitere vorteilhafte Ausführungen der Erfindung sind in den Unteransprüchen angegeben.

Ein Ausführungsbeispiel der Erfindung ist in der Zeichnung dargestellt und wird im folgenden näher beschrieben.

Es zeigen
- Fig 1: eine schematische Seitenansicht der Kollisionsschutzvorrichtung nach der Erfindung
- Fig 2: einen Schnitt durch den Fühlerschutz

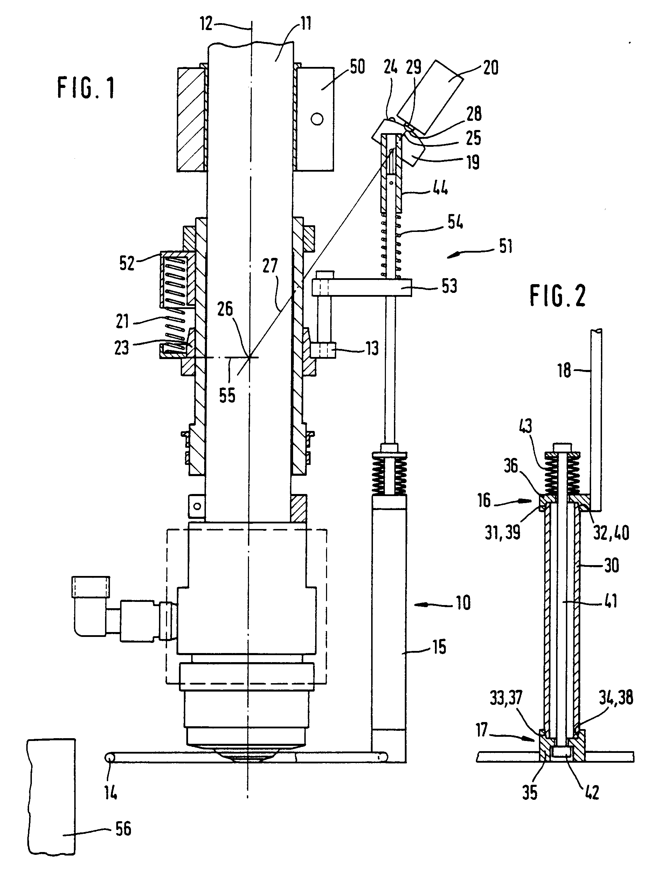

In der Fig. 1 ist der Brenner mit 11 bezeichnet, der über eine Brennerhalterung 50 mit einer nicht näher dargestellten Führungsmaschine verbunden ist. An dem Brenner ist eine Kollisionsschutzvorrichtung angeordnet, die in ihrer Gesamtheit mit 51 bezeichnet ist. Die Kollisionsschutzvorrichtung 51 weist einen Fühler 10 mit einem geschlossenen Fühlerring 14 auf. Der Fühlerring 14 ist über eine neben dem Brenner verlaufende Fühlerschutzstange 15 mit zwei elastischen Kipplagern 16, 17 und einer an dem oberen Kipplager 16 befestigten Haltestange 18 an einem Halter 13 befestigt. Der Halter 13 umgibt den Brenner 11 und ist zu der Brennerachse 12 in allen Richtungen kippbar und höhenverschiebbar gelagert. Über einen oberhalb des Halters 13 verlaufenden Abschnitt der Haltestange 18, welche mit einem Schaltkörper 19 verbunden ist, wird ein Schalter 20, vorzugsweise ein Endschalter, betätigt. Der Halter 13 ist über mehrere kreisringförmig um den Brenner 11 angeordnete Druckfedern 21 gegen eine Flanschfläche eines Halbkugelstumpfes 23 gespannt. Der Halbkugelstumpf 23 ist koaxial zur Brennerachse 12 an dem Brenner 11 oder an den Brenner umgebenden Bauteilen befestigt. Als Gegenlager der Druckfedern 21 dient eine dem Halter 13 gegenüberliegende und am Brenner 11 angeordnete Lagerscheibe 52, in der Bohrungen zur Aufnahme der Druckfedern 21 vorgesehen sind.

Die Fühlerschutzstange 15 besteht aus einem Hohlkörper 30, vorzugsweise aus einem Vierkantrohr an dessen Enden trapezförmige Führungsflächen 31 bis 34 angeordnet sind. Die trapezförmigen Führungsflächen 31 bis 34 liegen jeweils an trapezförmigen Führungsflächen 37 bis 40 von zwei Gegenkörpern 35, 36 an. Der obere Gegenkörper 36 ist mit der Haltestange 18 und der untere Gegenkörper 35 mit dem Fühlerring 14 verbunden. Die Verbindung der Gegenkörper 35, 36 mit dem Hohlkörper 30 erfolgt über eine durch den Hohlkörper 30 und die Gegenkörper 35, 36 geführte Stange 41. Die Stange 41 liegt in der Ausgangsstellung über ein Verbindungselement 42 fest an dem Gegenkörper 35 und über eine Druckfeder 43 elastisch an dem Gegenkörper 36 an. An dem Gegenkörper 36 ist die an einem Ausleger 53 des Halters 13 befestigte Haltestange 18 angeordnet.

Der am freien Ende der Haltestange 18 angeordnete Schaltkörper 19 ist an einer auf der Haltestange vertikal verschiebbaren Hülse 44 gelagert. Zwischen der Hülse und dem Halter 13 ist eine Druckfeder 54 angeordnet. Der Schaltkörper 19 ist vorteilhaft als Scheibe mit zum Schalter 20 gerichteter gewölbter Oberfläche 24 ausgebildet und rechtwinkelig zu einer durch seinen Mittelpunkt 26 und durch den Schnittpunkt 26 zwischen einer Verlängerung 55 der Flanschfläche 22 und der Brennerachse 12 gelegten Verbindungslinie 27 angeordnet. Durch diese Anordnung des Schaltkörpers werden vorteilhaft gleichlange Schaltwege erreicht. In dem Mittelpunkt 25 der gewölbten Oberfläche 24 ist eine Vertiefung 28 vorgesehen, in welcher das Schaltelement 29 des Schalters 20 in seiner Ausgangsstellung angeordnet ist.

Der Brenner 11 wird im Betrieb mit einer Führungsmaschine entlang von X und Y Koordinaten und über eine Brenneraufhängung vertikal verfahren. Bei einer Kollision zwischen einem Kollisionskörper 56 und dem Fühlerring 14 wird der Halter aufgrund der gegenüber der Druckfeder 43 geringeren Federkraft der Druckfedern 21 entlang des Halbkugelstumpfes 23 gekippt. Dabei wird der Schaltkörper 19 aus seiner Ausgangslage bewegt. Das Schaltelement 19 bewegt sich aus der Vertiefung 28 auf die gewölbte Oberfläche 24 und löst hierbei ein Schaltsignal in dem Schalter 20 aus. Dieses Schaltsignal wird vorzugsweise dem Not-Aus der Führugnsmaschine zugeführt. Die Führungsmaschine schaltet alle elektrischen Antriebe ab. Aufgrund der Massenträgheit der Führungsmaschine verfährt diese in Abhängigkeit von ihrer Geschwindigkeit weiter. Dabei kann die höchstmögliche Kippung des Halters 13 überschritten werden. In diesem Fall wird die Fühlerschutzstange in Abhängigkeit von der Kipprichtung ausgelenkt, wobei sich die Gegenkörper 35, 36 aufgrund ihrer elastischen Lagerung von den Führungsflächen 31 bis 34 der Fühlerschutzstange 15 abheben. Nach dem Lösen des Kontaktes zwischen Kollisionskörper 56 und Fühlerring 14 bewegt sich dieser aufgrund der Führungsflächen 31 bis 34 und 35 bis 36 selbsttätig in seine Ausgangslage zurück. Dies erfolgt auch bei dem Halter 13.

Wie aus der Fig. 1 ersichtlich ist, wird beim Aufstoßen des Fühlerringes 14 auf einen unter ihm angeordneten Kollisionskörper 56 der Halter 13 entgegen der Federkraft der Druckfedern 21 vertikal nach oben geschoben. Dies führt ebenfalls zur Betätigung des Schalters 20. Zur Sicherung des Schalters 20 und des Schaltkörpers 19 gegen Beschädigungen ist der Schaltkörper 19 über die Feder 54 elastisch gelagert, so daß beim Auffahren des Halters 13 auf die Lagerscheibe 52 die Hülse 49 mit dem Schaltkörper 19 vertikal entgegen der Federkraft der Feder 54 verschoben wird. Die Kollisionsschutzvorrichtung 51 wird bevorzugt beim Unterwasserplasmaschneiden eingesetzt, wobei der Fühler 10 als mechanischer Kontaktfühler ausgebildet ist.

Selbstverständlich ist es auch möglich, den Fühler 10 als kapazitiven oder induktiven Fühler auszubilden. Vorteilhaft wird der An- und Ausbau des Fühlers 10 erleichtert, wenn der Halter 13 neben dem Brenner angeordnet ist.

## Patentansprüche

1. Kollisionsschutzvorrichtung (51) für einen Brenner (11) mit mindestens einem den Brenner gegen Kollision schützenden und vor dem Brenner angeordneten Fühler (10), welcher beim Anstoßen an einen Kollisionskörper ein Schaltsignal auslöst,
dadurch gekennzeichnet,
daß der Fühler (10) an einem den Brenner (11) umgebenden oder neben dem Brenner (11) angeordneten, relativ zu der Brennerachse (12) in allen Richtungen kippbaren und höhenverschiebbaren Halter (13) befestigt ist, und daß eine mit dem Halter (13) verbundene Haltestange (18) über einen Schaltkörper (19) an einem Schalter (20) anliegt und die Haltestange (18) in Abhängigkeit von der Kipprichtung auslenkbar ist.

2. Kollisionsschutzvorrichtung nach Anspruch 1,
dadurch gekennzeichnet,
daß der Fühler (10) als im wesentlichen geschlossener Fühlerring (14) ausgebildet ist, der über eine neben dem Brenner (11) verlaufende Fühlerschutzstange (15) mit zwei elastischen Kipplagern (16, 17) und einer an dem einen Kipplager (16) befestigten Haltestange (18) an dem Halter (13) befestigt ist.

3. Kollisionsschutzvorrichtung nach Anspruch 1 oder 2,
dadurch gekennzeichnet,
daß der Halter (13) über mindestens ein elastisches Element (21), vorzugsweise über mehrere kreisringförmig angeordnete Druckfedern, gegen die Flanschfläche eines Halbkugelstumpfes (23) gespannt ist und der Halbkugelstumpf (23) koaxial zu der Brennerachse (12) angeordnet ist.

4. Kollisionsschutzvorrichtung nach einem der Ansprüche 1 bis 3,
dadurch gekennzeichnet,
daß der Schaltkörper (19) als Scheibe mit zum Schalter (20) gerichteter gewölbter Oberfläche (24) ausgebildet ist, die rechtwinklig zu einer durch ihren Mittelpunkt (25) und durch den Schnittpunkt (26) zwischen einer Verlängerung der Flanschfläche und der Brennerachse (12) gelegten Verbindungslinie (27) angeordnet ist.

5. Kollisionsschutzvorrichtung nach einem der Ansprüche 1 bis 4,
dadurch gekennzeichnet,
daß die Scheibe in dem Mittelpunkt (25) der gewölbten Oberfläche (24) eine Vertiefung (28) aufweist, in welcher das Schaltelement (29) des Schalters (20) in seiner Ausgangsstellung angeordnet ist.

6. Kollisionsschutzvorrichtung nach einem der Ansprüche 1 bis 5,
dadurch gekennzeichnet,
daß die Fühlerschutzstange (15) aus einem Hohlkörper (30), vorzugsweise einem Vierkantrohr, besteht, an dessen Enden trapezförmige Führungsflächen (31, 32, 33, 34) oder an dessen Enden Bauteile mit trapezförmigen Führungsflächen angeordnet sind, die jeweils an einem Gegenkörper (35, 36) mit trapezförmigen Führungsflächen (37, 38, 39, 40) elastisch anliegen, wobei der Gegenkörper (35) mit dem Fühlerring (14) und der Gegenkörper (36) mit der Haltestange (18) verbunden ist.

7. Kollisionsschutzvorrichtung nach einem der Ansprüche 1 bis 6,
dadurch gekennzeichnet,
daß durch den Hohlkörper (30) und die Gegenkörper (35, 36) eine Stange (41) geführt ist, die über ein Verbindungselement (42) fest an dem Gegenkörper (35) und über ein Element (43) vorzugsweise eine Druckfeder, elastisch an dem Gegenkörper (36) anliegt.

8. Kollisionsschutzvorrichtung nach einem der Ansprüche 1 bis 7,
dadurch gekennzeichnet,
daß die Federkraft des Elementes (43) größer ist als die Federkraft des Elementes (21).

9. Kollisionsschutzvorrichtung nach einem der Ansprüche 1 bis 8,
dadurch gekennzeichnet,
daß der Schaltkörper (19) an einer auf der Haltestange (18) vertikal verschiebbaren Hülse (44) befestigt und zwischen der Hülse (41) und dem Halter (13) eine Feder (54) angeordnet ist.

10. Kollisionsschutzvorrichtung nach einem der Ansprüche 1 bis 9,
gekennzeichnet durch die Ausbildung als mechanischer oder kapazitiver oder induktiver Fühler (10).

## Claims

1. Collision protection device (51) for a burner (11) having at least one sensor (10) which protects the burner against collision, is arranged in front of the burner and triggers a switching signal on impact with a collision body, characterised in that the sensor (10) is mounted on a holder (13) which surrounds the burner (11) or is arranged close to the burner (11), can be tilted in all directions relative to the burner axis (12) and is displaceable in height, and in that a holding rod (18) which is connected to the holder (13) rests via a switching body (19) on a switch (20), and the holding rod (18) can be deflected as a function of the tilting direction.

2. Collision protection device according to Claim 1, characterised in that the sensor (10) is constructed as an essentially closed sensor ring (14) which is mounted on the holder (13) via a sensor protection rod (15), which runs close to the burner (11) and has two elastic tilting bearings (16, 17) and a holding rod (18), which is mounted on the one tilting bearing (16).

3. Collision protection device according to Claim 1 or 2, characterised in that the holder (13) is clamped against the flange surface of a truncated hemisphere (23) via at least one elastic element (21), preferably via a plurality of compression springs which are arranged in an annular shape, and the truncated hemisphere (23) is arranged coaxially with respect to the burner axis (12).

4. Collision protection device according to one of Claims 1 to 3, characterised in that the switching body (19) is constructed as a disc having a surface (24) which is domed pointing towards the switch (20) and is arranged at right angles with respect to a connecting line which passes through the centre point (25) of said surface and through the intersection point (26) between an extension of the flange surface and the burner axis (12).

5. Collision protection device according to one of Claims 1 to 4, characterised in that the disc has a depression (28) at the centre point (25) of the domed surface (24), in which depression (28) the switching element (29) of the switch (20) is arranged in its original position.

6. Collision protection device according to one of Claims 1 to 5, characterised in that the sensor protection rod (15) consists of a hollow body (30), preferably a quadrilateral tube, on whose ends trapezoidal guide surfaces (31, 32, 33, 34) are arranged, or on whose ends components having trapezoidal guide surfaces are arranged, which in each case rest elastically on a mating body (35, 36) having trapezoidal guide surfaces (37, 38, 39, 40), the mating body (35) being connected to the sensor ring (14) and the mating body (36) being connected to the holding rod (18).

7. Collision protection device according to one of Claims 1 to 6, characterised in that a rod (41) is guided through the hollow body (30) and the mating bodies (35, 36), which rod (41) rests firmly, via a connecting element (42), on the mating body (35) and, via an element (43), preferably a compression spring, elastically on the mating body (36).

8. Collision protection device according to one of Claims 1 to 7, characterised in that the spring force of the element (43) is greater than the spring force of the element (21).

9. Collision protection device according to one of Claims 1 to 8, characterised in that the switching body (19) is mounted on a sleeve (44) which can be displaced vertically on the holding rod (18), and a spring (54) is arranged between the sleeve (41) and the holder (13).

10. Collision protection device according to one of Claims 1 to 9, characterised by construction as a mechanical, capacitive or inductive sensor (10).

## Revendications

1. Dispositif de protection anti-collision (51) pour une torche (11) comportant au moins un capteur (10) monté devant la torche et la protégeant contre les collisions, ce capteur déclenchant un signal de commutation lorsqu'il rencontre un obstacle, dispositif de protection caractérisé en ce que :
le capteur (10) est fixé à un support (13) entourant la torche (11) ou disposé à côté de la torche (11) et qui peut basculer dans toutes les directions par rapport à l'axe (12) de la torche et coulisser en hauteur, et en ce qu'une tige de fixation (18) reliée au support (13) s'applique par l'intermédiaire d'un élément de commutation (19) contre un commutateur (20) et la tige de fixation (18) peut se débattre en fonction de la direction de basculement.

2. Dispositif de protection anti-collision selon la revendication 1, caractérisé en ce que le capteur (10) est réalisé sous la forme d'un anneau de capteur (14) principalement fermé, qui est fixé par une tige de protection de capteur (15) passant à côté de la torche (11) à deux paliers de basculement élastiques (16, 17) et une tige de fixation (18) fixée à un palier basculant (16) sur le support (13).

3. Dispositif de protection anti-collision selon la revendication 1 ou 2, caractérisé en ce que le support (13) est monté par au moins un élément élastique (21) de préférence par plusieurs ressorts de compression répartis en cercle, contre la surface de bride d'un élément hémisphérique (23) et cet élément hémisphérique (23) est coaxial à l'axe (12) de la torche.

4. Dispositif de protection anti-collision selon l'une des revendications 1 à 3, caractérisé en ce que l'élément de commutation (19) est un disque avec une surface supérieure (24) bombée, tournée vers le commutateur (20), ce disque étant perpendiculaire à une ligne de liaison (27) passant par le centre (25) du disque et par le point d'intersection (26) du prolongement de la surface formant bride et de l'axe (12) de la torche.

5. Dispositif de protection anti-collision selon l'une ou plusieurs des revendications 1 à 4, caractérisé en ce que le disque comporte au centre (25) de sa surface bombée (24) une cavité (28) qui reçoit l'élément de commutation (29) du commutateur (20) lorsque celui-ci est en position de sortie.

6. Dispositif de protection anti-collision selon l'une des revendications 1 à 5, caractérisé en ce que la tige de protection de capteur (15) est un corps creux (30) de préférence de section carrée dont les extrémités sont munies de surfaces de guidage trapézoïdales (31, 32, 33, 34) ou dont les extrémités comportent des pièces avec des surfaces de guidage trapézoïdales qui s'appliquent élastiquement respectivement contre un organe antagoniste (35, 36) muni de surfaces de guidage trapézoïdales (37, 38, 39, 40), et l'organe opposé (35) est relié à l'anneau de capteur (14), l'organe opposé (36) étant relié à la tige de fixation (18).

7. Dispositif de protection anti-collision selon l'une des revendications 1 à 6, caractérisé en ce que le corps creux (30) et les organes opposés (35, 36) sont traversés par une tige (41) qui est reliée solidairement à l'organe opposé (35) par l'intermédiaire d'un élément de liaison (42) et qui s'applique élastiquement contre l'autre organe opposé (36) par l'intermédiaire d'un élément (43) qui est de préférence un ressort de compression.

8. Dispositif de protection anti-collision selon l'une des revendications 1 à 7, caractérisé en ce que la force de ressort de l'élément (43) est supérieure à la force de ressort de l'élément (21).

9. Dispositif de protection anti-collision selon l'une des revendications 1 à 8, caractérisé en ce que l'organe de commutation (19) est fixé à un manchon (44) coulissant verticalement sur la tige de fixation (18), un ressort (54) étant prévu entre le manchon (41) et le support (13).

10. Dispositif de protection anti-collision selon l'une des revendications 1 à 9, caractérisé en ce que le capteur (10) est un capteur mécanique ou capacitif ou inductif.
